# EUROPEAN PATENT APPLICATION

(11) **EP 4 530 099 A1**
(43) Date of publication of application: **02.04.2025**
(21) Application number: 24202909.8
(22) Date of filing: 26.09.2024
(51) Int. Cl.: B60C 17/00, B60C 19/12, B60C 23/00

(54) **TIRE WITH SEALANT AND TIRE PUNCTURE SENSOR SYSTEM**

(30) Priority: 29.09.2023 US 202363586591 P; 05.08.2024 US 202418794439
(71) Applicant: The Goodyear Tire & Rubber Company, Akron, OH 44316 (US)
(72) Inventor: BAUMANN, Thomas Egon, D-63743 Aschaffenburg (DE); GOERL, Roman, D-63785 Obernburg am Main (DE); BRUECKNER, Moritz, D-63776 Mömbris (DE); ATA, Selcuk, D-63579 Freigericht (DE); VOGEL, Viktor Pranas, D-64665 Alsbach-Haehnlein (DE); GUPTA, Sameer, D-63457 Hanau (DE); BILMEZ, Umit, D-63452 Hanau (DE)
(74) Representative: Kutsch, Bernd

(57) **Abstract**

A tire is disclosed comprising a circumferential tread portion; an inner surface partially enclosing a tire cavity; a circumferential sealant layer at least partially provided on the inner surface radially below the tread portion, wherein the sealant layer has a radially inner side and a radially outer side; a first electrically conductive layer at least partially covering one side of the sealant layer; a second electrically conductive layer which is arranged essentially in parallel to the first electrically conductive layer, and which is non-conductively separated from the first electrically conductive layer; and a sensor system which is in separate electrical contact with the first electrically conductive layer and the second electrically conductive layer and which is adapted to detect an increase in electrical conductivity between the first electrically conductive layer and the second electrically conductive layer.

## Description

### Field of the Invention

The present invention is directed to a tire, particularly to a pneumatic tire, comprising a sealant layer and a sensor system, particularly for detecting a puncture of the tire and/or the sealant layer.

### Background of the Invention

Tire robustness has been considerably improved over the past decades. Besides other methods, the provision of sealant layers helps to maintain tire inflation pressure even in case of tire punctures, typically caused by nails or screws. However, at least in some cases, a driver of a vehicle having a punctured tire equipped with a sealant layer may not notice such a puncture and might continue driving with the punctured tire for a relatively long time. It may be desirable to inform the driver and/or vehicle owner about the tire puncture. Thus, while progress has been made in the development of puncture resistant tires, room for improvement remains.

### Summary of the Invention

The invention relates to a tire in accordance with claim 1 or with claim 15.

Dependent claims refer to preferred embodiments of the invention.

In a first preferred aspect of the present invention, the invention is directed to a tire comprising a circumferential tread portion and an inner surface partially enclosing a tire cavity. Furthermore, the tire comprises a circumferential sealant layer at least partially provided on the inner surface radially below the tread portion. The sealant layer has a radially inner side and a radially outer side. Furthermore, the tire comprises a first electrically conductive layer at least partially covering one side of the sealant layer. Moreover, the tire has a second electrically conductive layer arranged essentially in parallel to the first electrically conductive layer and being non-conductively separated from the first electrically conductive layer. Still in accordance with the first aspect, the tire comprises a sensor system in separate electrical contact with the first electrically conductive layer and the second electrically conductive layer, and which is adapted to detect an increase in electrical conductivity between the first electrically conductive layer and the second electrically conductive layer.

In a second preferred aspect of the present invention, the invention is directed to a tire comprising a circumferential tread portion and an inner surface partially enclosing a tire cavity. Furthermore, the tire comprises a circumferential sealant layer which is at least partially provided on the inner surface radially below the tread portion, and a first electrically conductive layer which at least partially covers a radially inner surface of the sealant layer. In particular, the sealant layer has an electrical volume resistivity which is at least 100 times higher than an electrical volume resistivity of the first electrically conductive layer. Moreover, the tire comprises a second electrically conductive layer provided radially above the sealant layer, and a sensor system which is in separate electrical contact with the first electrically conductive layer and the second electrically conductive layer. The sensor system is adapted to detect a short-circuit between the first electrically conductive layer and the second electrically conductive layer. Still in accordance with the second aspect, the sensor system comprises a transmitter adapted to wirelessly transmit a signal informing about a detected short-circuit.

In a preferred aspect of the invention, the sealant layer comprises an elastomer composition comprising: from 80 phr to 100 phr of a rubber selected from butyl rubber, and halogenated butyl rubber; from 20 phr to 90 phr of a filler, comprising one or more of carbon black and silica; and from 300 phr to 600 phr of liquid plasticizer selected from one or more of oil, liquid polymer, and polyisobutene.

### Brief Description of the Drawings

The invention will be described by way of example and with reference to the accompanying drawings in which:
FIG. 1 is a schematic cross-section of a tire according to one embodiment of the present invention;
FIG. 2 is a schematic cross-section of the tire according to Figure 1, in which the tire is punctured by a screw and transmits a signal about the detected tire puncture;
FIG. 3 is a schematic cross-section of a tire according to another embodiment of the present invention;
FIG. 4 is a schematic cross-section of the tire according to Figure 3, wherein the respective tire is punctured by a nail and transmits a signal about the detected puncture;
FIG. 5 is a schematic cross-section of a tire in accordance with another embodiment of the present invention, wherein the tire comprises an RFID tag which is attached to its sidewall and informs about a tire puncture;
FIG. 6 is a schematic circuit diagram of a measurement circuit for detecting a short-circuit between the first electrically conductive layer and the second electrically conductive layer of the embodiment shown in Figures 1 and 2;
FIG. 7 is another schematic circuit diagram of the measurement circuit already shown in Figure 6, wherein the measurement circuit is closed by a metal screw connecting both conductive layers;
FIG. 8 is yet another schematic cross-section of a tire, in accordance with yet another embodiment of the present invention in which two electrically conductive layers are arranged radially on top of each other on a radially inner side of a sealant layer; and
FIG. 9 is a schematic plan view in the radial direction of the two layers shown already in Figure 8.

### Detailed Description of Preferred Embodiments of the Invention

In accordance with the first preferred aspect, the invention is directed to a tire (preferably a pneumatic tire) comprising a circumferential tread portion and an inner surface partially enclosing a tire cavity. Furthermore, the tire comprises a circumferential sealant layer at least partially provided on the inner surface radially below (or inwards) the tread portion. Said sealant layer has a radially inner side or surface and a radially outer side or surface. The tire also comprises a first electrically conductive layer at least partially covering one side or surface of the sealant layer. Moreover, the tire has a second electrically conductive layer provided or arranged essentially in parallel to the first layer and being non-conductively separated from the first electrically conductive layer. Still in accordance with the first aspect, the tire comprises a sensor system which is in electrical contact with the first electrically conductive layer and in separate electrical contact with the second electrically conductive layer, and which is adapted or configured to detect an increase in electrical conductivity (particularly, adapted to detect an electrical current or an electrical short-circuit) between the first electrically conductive layer and the second electrically conductive layer.

In particular, the invention allows detection and information about tire punctures. For instance, typically, a metal nail or screw may penetrate the tire tread portion and sealant layer. Such an electrically conductive metal nail or screw electrically connects the first electrically conductive layer with the second electrically conductive layer which is detected by the sensor system. While the sealant as such may seal the tire against a loss of air pressure, the driver and/or the vehicle can additionally be informed that the tire seems to have a puncture and may need one or more of revision, repair and replacement.

In one embodiment, the first electrically conductive layer comprises one or more of an electrically conductive coating, an electrically conductive foil, an electrically conductive mesh, an electrically conductive fabric, a plurality of electrically conductive wires (such as essentially parallel wires), and an electrically conductive elastomer composition layer. It is possible that the first layer is provided on a radially inner side or surface of the sealant layer or on a radially outer side or surface of the sealant layer. Conductive coatings could comprise or consist of metal and could be applied by methods known in the art, such as plasma coating. Coating with metal powders is also an option. An electrically conductive foil is for example a metal foil, which may optionally be adhered to the sealant layer without further adhesive, such as due to typical stickiness of sealant compositions. An electrically conductive mesh could be a metal mesh or grid. It is also possible that the mesh comprises cords and/or fibers of textile material comprising a conductive metal or polymer (e.g., rubber) composition coating. Such a mesh may again be carried by the sealant layer without an additional adhesive. Mesh openings preferably have a maximum diameter of 1 mm. Adjacent wires of a plurality of adjacent wires, such as a plurality of essentially parallel wires, preferably have a distance of at most 1 mm, measured perpendicularly to the parallel extension of said wires. An electrically conductive fabric may comprise metal cords and/or fibers, or may be a textile fabric coated with a metal and/or electrically conductive elastomer composition, e.g., rubber composition. An electrically conductive elastomer composition layer (preferably, rubber composition layer) may comprise one or more elastomers or rubbers, such as natural rubber, synthetic polyisoprene, polybutadiene rubber, and styrene-butadiene rubber. Moreover, such a composition may comprise at least 35 phr carbon black, preferably at least 38 phr, more preferably at least 40 phr, or at least 45 phr of carbon black.

In another embodiment, at least one of the first electrically conductive layer and the second electrically conductive layer comprises one or more of a metal coating, a metal foil, a metal mesh, a metal coated textile mesh, a metal coated fabric, a plurality of electrically conductive metal wires (such as essentially parallel wires), and an electrically conductive rubber composition.

In another embodiment, the second electrically conductive layer is provided radially above, or outward, the first electrically conductive layer.

In still another embodiment, the second electrically conductive layer is one or more of i) electrically separated from, ii) electrically non-conductively separated from, and iii) spatially separated from the first electrically conductive layer, and/or vice versa. Optionally, the second electrically conductive layer is electrically insulated from the first electrically conductive layer, and/or vice versa.

In still another embodiment, the first electrically conductive layer and the second electrically conductive layer are spatially separated from each other.

In still another embodiment, the first electrically conductive layer and the second electrically conductive layer are non-conductively and spatially separated from each other. In particular, they can be separated by electrically non-conductive material, such as one or more of electrically non-conductive polymer compositions, electrically non-conductive layers, and layers of electrically non-conductive rubber compositions.

In another embodiment at least one of the electrically conductive layers, preferably the radially inner conductive layer, has a (maximum) axial width which is at least 1% smaller than a (maximum) axial width of the sealant layer, e.g., within 1% to 10%, preferably from 1% to 5% axially smaller than the (maximum) axial width of the sealant layer. Preferably, this may apply in case of an electrically non-conductive sealant layer.

In another embodiment, each axially outer edge of one or more of the electrically conductive layers has an axial distance from the adjacent axially outer edge of the sealant layer within a range of 0.5% to 5% of a maximum axial width of the sealant layer.

In still another embodiment, the first electrically conductive layer has a thickness within a range of 0.1 mm to 2 mm, preferably of 0.1 mm to 1.5 mm. In case of a metal foil or coating the thickness is preferably within a range of 0.1 mm to 0.9 mm. Layer thicknesses are measured in the radial direction, unless indicated otherwise herein.

In still another embodiment, the sealant layer has a thickness within a range of 1 mm to 8 mm, preferably within a range of 2.5 mm to 5.5 mm.

In still another embodiment, the sealant layer comprises an elastomer composition, preferably rubber composition, comprising one or more of: from 60 phr, preferably from 80 phr, to 100 phr of rubber selected from one or more of butyl rubber, halogenated butyl rubber, ethylene propylene diene monomer rubber, styrene-butadiene rubber, acrylonitrile-butadiene rubber, acrylonitrile-butadiene-styrene rubber, polybutadiene rubber, natural rubber, and synthetic polyisoprene; from 20 phr to 100 phr of a filler; from 150 phr to 600 phr of liquid plasticizer selected from one or more of oil, liquid polymer, and polyisobutene.

The term "liquid" means herein that a material is in a liquid state at a temperature of 23°C.

In still another embodiment, the sealant layer comprises a rubber composition comprising one or more of: from 80 phr to 100 phr of a rubber selected from butyl rubber, and halogenated butyl rubber; from 20 phr to 90 phr of a filler, comprising one or more of carbon black and silica; and from 300 phr to 600 phr of liquid plasticizer selected from one or more of oil, liquid polymer (preferably, liquid diene-based polymer), and polyisobutene.

Preferably, the rubber composition of the sealant layer comprises from 300 phr to 600 phr of polyisobutene (also known as polyisobutylene). Preferably, the sealant layer is a peroxide cured sealant layer.

In still another embodiment, the sealant layer comprises a rubber composition and/or features as disclosed in United States Patent Application Publication US 2016/0068031 A1 and/or in United States Patent US 10,870,319 B2.

In still another embodiment, at least one, preferably each electrically conductive layer extends over an area of at least 70% of an adjacent surface of the sealant layer, preferably continuously over at least 70%, preferably at least 80%, or at least 90% of the maximum axial width of the radially inner surface of the sealant layer. In addition, or alternatively, one or both electrically conductive layers extend essentially in parallel to the sealant layer.

In still another embodiment, the second electrically conductive layer comprises one or more of i) a metal coating, ii) a metal foil, and iii) a metal mesh, having a thickness within a range of 0.1 mm to 1 mm. In addition, or alternatively, it is an option that the second electrically conductive layer has the same features as mentioned herein above in relation to the first electrically conductive layer.

In still another embodiment, the tire comprises one or more of:
i) an innerliner forming (at least a portion of) the inner surface of the tire and comprising an electrically conductive rubber composition,
ii) a belt ply, arranged radially between the sealant layer and the tread portion, and comprising an electrically conductive rubber composition and optionally metal cords coated with an electrically conductive rubber composition,
iii) an overlay comprising an electrically conductive rubber composition, preferably textile cords and/or one or more textile fabrics coated with an electrically conductive rubber composition,
iv) a tread base layer comprising or consisting of an electrically conductive rubber composition (wherein, optionally, the tread base layer is provided radially below a tread cap layer of the tread portion, and wherein the tread cap layer contacts the road when driving), and
v) the tread portion comprising an electrically conductive rubber layer axially extending over at least 90% of an axial footprint width of the tire. Such a footprint width is measured herein at maximum tire load (such as indicated on the tire's sidewall), a pressure of 2.5 bar and at 23°C.

Optionally, at least one of said electrically conductive rubber compositions forms the second electrically conductive layer. In other words, at least one of the above listed members i), ii), iii), iv), and v) may form the second electrically conductive layer.

In another embodiment, the first electrically conductive layer is arranged on one of the radially inner side (or surface) and the radially outer side (or surface) of the sealant layer.

In still another embodiment, the first electrically conductive layer and the second electrically conductive layer are arranged on the same side or surface of the sealant layer. Optionally, both, the first layer and the second layer, are adjacent. In such a case, at least one of the layers is preferably electrically insulated.

In still another embodiment, one or more of the first electrically conductive layer and the second electrically conductive layer is electrically insulated. Preferably, one or more of the first electrically conductive layer and the second electrically conductive layer comprises an electrical insulation, or, in other words comprise one or more of an electrically insulating coating, and an electrically insulating envelope.

In still another embodiment, one or more of the first electrically conductive layer and the second electrically conductive layer extend circumferentially in the tire.

In still another embodiment, the first electrically conductive layer is arranged on a radially inner side (or surface) of the sealant layer, and/or the sealant layer comprises an elastomer composition (preferably a rubber composition) having an electrical volume resistivity which is at least 100 times higher than the electrical volume resistivity of the first electrically conductive layer, and optionally 100 times higher than the electrical volume resistivity of the second electrically conductive layer. Optionally, the sealant layer and/or its elastomer, particularly rubber composition may be described as electrically non-conductive.

A material or composition is considered herein to be electrically conductive if it has an electrical volume resistivity which is lower than 10⁸ Ohm·cm, preferably lower than 10⁷ Ohm·cm.

For instance, metals have a far lower electrical volume resistivity, optionally within a range of 10⁻⁶ Ohm cm to 10⁻³ Ohm·cm, and are electrically conductive.

Electrical volume resistivity is determined herein in accordance with ASTM D257-98, or equivalent.

Optionally, a material or composition is considered herein to be electrically non-conductive if having an electrical volume resistivity which is higher than 10⁹ Ohm·cm, preferably higher than 10¹⁰ Ohm cm.

In still another embodiment, the second electrically conductive layer is arranged on a radially outer side (or surface) of the sealant layer.

In still another embodiment, both electrically conductive layers are electrically separated (or, in other words, non-conductively separated) from each other, such as by at least one electrically non-conductive layer. For instance, such a layer may be one or more of, the sealant layer, an innerliner, a belt ply, an overlay, and a tread base layer. However, it can also be any other kind of non-conductive polymer composition layer. In one embodiment, the electrically non-conductive layer comprises a rubber composition which is electrically non-conductive as described above. One way known to the person skilled in the art to render a rubber composition conductive or non-conductive is to adjust the carbon black content of the rubber composition, wherein higher carbon black contents may increase the electrical conductivity and lower carbon black contents decrease the electrical conductivity of the rubber composition. Conductive and non-conductive rubber compositions as such, which are suitable for the above layers are known in the art.

In yet another embodiment, the sensor system is adapted to and/or comprises a measurement circuit adapted to detect one or more of an electrical current, an increase of electrical current, and a short-circuit between the first electrically conductive layer and the second electrically conductive layer. In particular, a short-circuit between these layers can be detected. The wordings "adapted to" and "configured to" are used interchangeably herein.

In still another embodiment, the sensor system and/or the measurement circuit is adapted to detect a short-circuit between the first electrically conductive layer and the second electrically conductive layer. In addition, or alternatively, the measurement circuit can also be mentioned as sensor circuit herein, such as for the detection of a short-circuit between the first electrically conductive layer and the second electrically conductive layer.

In still another embodiment, the sensor system comprises a power source (preferably, a DC power source, or, alternatively, an AC power source). Optionally, a first pole of the power source is electrically connected with the first electrically conductive layer and a second pole of the power source is electrically connected with the second electrically conductive layer. In particular, a short-circuit between the first electrically conductive layer and the second electrically conductive layer, such as caused by a metal object electrically puncturing and/or connecting the first electrically conductive layer and the second electrically conductive layer, causes an electrical current or increased electrical current (such as a short-circuit) between the first electrically conductive layer and the second electrically conductive layer. In other words, such a metal object penetrating or puncturing both conductive layers, may also be considered as an electrical switch, closing an electrical circuit between the first electrically conductive layer and the second electrically conductive layer. Optionally, one or more resistors may be arranged in the electrical pathway between one or more of the first pole and the first electrically conductive layer, and/or the second pole and the second electrically conductive layer.

In still another embodiment, the sensor system further comprises a transmitter, wherein the sensor system is configured to wirelessly transmit information about or indicating a detected short-circuit via the transmitter. For instance, the transmitter is adapted to transmit signals wirelessly via one or more of Bluetooth^{™}, wireless network, radio waves, or other wireless transmission techniques. Similarly, a receiver mentioned herein can be adapted to wirelessly receive signals by one or more of Bluetooth^{™}, wireless network, radio waves, or other wireless transmission techniques.

In still another embodiment, the measurement circuit comprises a sensor arranged and adapted to determine an electrical current between the first electrically conductive layer and the second electrically conductive layer. This shall not mean that the sensor is physically positioned between both conductive layers. Rather the sensor is, e.g., provided in the measurement circuit (electrically) connecting the first electrically conductive layer with the second electrically conductive layer.

In still another embodiment, the sensor system, particularly the measurement circuit, comprises a first insulated electrical line and a second insulated electrical line, wherein the sensor system, particularly the measurement circuit, is in electrical connection or communication with the first electrically conductive layer by the first electrical line and in electrical connection or communication with the second electrically conductive layer by the second electrical line. For instance, such electrical lines may be insulated wires. They may be at least partially attached to the inner surface of the tire such as to the innerliner. Such a feature is not mandatory though.

In still another embodiment, the sensor system comprises a sensor transmitter unit carrying the sensor and the transmitter, such as in a common housing of the sensor transmitter unit. Preferably, the sensor transmitter unit is attached to the inner surface in a sidewall region of the tire. The sensor transmitter unit may also be a tag, such as an RFID tag discussed further herein below.

In still another embodiment, the tire and/or the sensor system further comprises a container (such as a polymer composition-based container, e.g., an elastomer composition-based container, preferably a rubber composition-based container) carrying and/or partially enclosing the sensor transmitter unit. In particular, the container may at least partially enclose a housing of the sensor transmitter unit.

In still another embodiment the sensor system and/or the sensor transmitter unit further comprises one or more of a power source, a processing unit, a receiver, and a memory. In particular, it may comprise one or more of multiple power sources (such as one power source for the measurement circuit and a separate power source for the transmitter), processing units, receivers, and memories (such as a rewritable memory for recording information received by the sensor and a non-rewritable memory, which may for instance comprise information about the sensor system).

In still another embodiment, the container is attached to the inner surface by an adhesive and/or co-cured to the inner surface. Alternatively, the sensor transmitter unit is adhered directly to the inner surface of the tire, such as via an adhesive.

In still another embodiment, the tire comprises a sensor transmitter unit comprising the sensor, the transmitter, and optionally a power source, wherein the sensor transmitter unit is carried by the container attached to the inner surface of the tire.

In still another embodiment, the sensor system (optionally, the sensor transmitter unit) further comprises a tire pressure sensor. Optionally, the tire pressure sensor is also part of the sensor transmitter unit. As a further option, it may also be carried by said container. The sensor system may further be adapted to wirelessly transmit information detected by the tire pressure sensor via the transmitter, such as of the sensor transmitter unit.

In still another embodiment, the sensor system comprises a radio-frequency identification (RFID) tag. Optionally, the RFID tag comprises one or more of the sensor, the transmitter, a receiver, a memory, a processing unit, and a power source.

In still another embodiment, the power source comprises or consists of a battery.

In still another embodiment, the power source is powered by another external power source, such as an external RFID reader.

In still another embodiment, the RFID tag is configured to detect via its sensor, preferably upon being triggered by an RFID reader device, whether an increase in electrical conductivity, particularly a short-circuit between the first electrically conductive layer and the second electrically conductive layer is present. If such an increase in electrical conductivity or a short-circuit is detected, the RFID tag is adapted and/or configured to send a signal indicating said increase in electrical conductivity or short-circuit via its transmitter to the RFID reader and/or to store information indicating the increase in electrical conductivity or short-circuit in its memory, if available. For instance, an RFID reader may be part of the vehicle or be a separate, external reader, such as a hand-held reader.

In still another embodiment, the RFID tag is co-cured to the tire, such as to an innerliner and/or the inner surface. Preferably, the RFID tag is provided at the sidewall of the tire.

In still another embodiment, the RFID tag is attached to the inner surface (such as to the innerliner) of the tire at a sidewall portion of the tire. In addition, or alternatively, the RFID tag is one of co-cured to or attached with an adhesive to the inner surface. The attachment of RFID tags to inner surfaces of tires as such is disclosed in EP 4 019 241 A2.

In still another embodiment, the RFID tag is embedded and/or attached to in the sealant layer. In such an embodiment the RFID tag may for example be attached / adhered to the sealant layer after tire cure.

In still another embodiment, the RFID tag is attached to an electrically conductive layer provided on a radially inner side of the sealant layer. For instance, it can be adhered with an adhesive. Alternatively, it is also possible that the conductive layer has an aperture at the position of the RFID tag such that the RFID tag sticks directly to and/or is embedded in the sealant layer on a radially inner side of the sealant layer.

In still another embodiment, the first electrically conductive layer is an electrically conductive foam layer. Optionally, the sensor transmitter unit and/or the RFID tag is attached to, optionally embedded in, the foam layer, such as by an adhesive. An electrically conductive foam layer may comprise one or more of an electrically conductive polymeric foam, a polymeric foam coated with an electrically conductive material such as a metal, and a metallic foam. Metal coatings can be applied as known in the art.

In still another embodiment, the first electrically conductive layer comprises a first plurality of essentially parallel wires, and the second electrically conductive layer comprises a second plurality of essentially parallel wires arranged transversely to the first plurality of essentially parallel wires.

In still another embodiment, one or more of said first plurality of essentially parallel wires and said second plurality of essentially parallel wires is electrically insulated. In other words, preferably each wire of the respective plurality of wires is insulated and/or surrounded by an electrical insulator.

In still another embodiment, said first plurality of wires and the second plurality of wires are arranged together in and/or form together a net (or in other words mesh).

In still another embodiment, wires of the first plurality of essentially parallel wires and wire of the second plurality of essentially parallel wires are at least partially interwoven with each other, optionally such that both layers form a net of interwoven wires or a woven net of wires.

In still another embodiment, wires of the first plurality of wires and the second plurality of wires extend transversely to each other in the net.

In still another embodiment, wires of the first plurality of wires and the second plurality of wires extend essentially in parallel and/or alternate with respect to each other.

If a conductive nail or screw pierces the net, adjacent wires of the first plurality of wires and the second plurality of wires can be electrically connected, or electrically short-circuit, such as when the puncturing nail or screw damages the insulation of adjacent wires.

According to the second preferred aspect, the invention is directed to a tire (particularly a pneumatic tire) comprising a circumferential tread portion, an inner surface partially enclosing a tire cavity, and a circumferential sealant layer, which is at least partially provided on the inner surface radially below the tread portion. Still in accordance with the second aspect, a first electrically conductive layer at least partially covers a radially inner surface of the sealant layer and a second electrically conductive layer is provided radially above the sealant layer. Furthermore, the sealant layer has an electrical volume resistivity which is at least 100 times higher than an electrical volume resistivity of the first electrically conductive layer, and optionally of the second electrically conductive layer. Moreover, the tire comprises a sensor system which is in electrical contact with the first electrically conductive layer and separately with the second electrically conductive layer, and which is adapted to detect a short-circuit between the first electrically conductive layer and the second electrically conductive layer, particularly upon electrically short-circuiting the first electrically conductive layer and the second electrically conductive layer. Moreover, the sensor system comprises a transmitter adapted to wirelessly transmit a signal informing about a detected short-circuit.

Such a tire provides again the possibility of informing about a tire puncture so that the tire can be checked and repaired if deemed appropriate.

In another aspect, the present invention is directed to a method of using the tire according to the first or second aspect, or one or more of the embodiments disclosed herein, to detect and/or inform about a puncture of the tire.

In still another aspect, the present invention is directed to a method of detecting and/or informing about a tire puncture, preferably of the tire according to one or more of the aspects, or, one or more of embodiments mentioned herein.

In one embodiment, the method comprises the step of monitoring one or more of a presence of an increase of electrical conductivity and an electrical current between a first electrically conductive layer and a second electrically conductive layer (preferably arranged essentially in parallel to the first electrically conductive layer), which is non-conductively separated from the first electrically conductive layer.

In another embodiment, the method comprises the step of detecting the tire puncture by detecting one or more of an increase of electrical conductivity, an increase of an electrical current, and a short-circuit between a first electrically conductive layer and a second electrically conductive layer (preferably arranged essentially in parallel to the first electrically conductive layer) of the tire, such as upon electrical connection of the first electrically conductive layer and the second electrically conductive layer, e.g., by a metal element penetrating and/or electrically connecting both layers.

In still another embodiment, the method further comprises the step of storing information about the detected tire puncture.

In still another embodiment, the method further comprises the step of wirelessly transmitting information about the detected tire puncture, e.g., upon external wireless request, e.g., received by a wireless reader.

It is emphasized that all aspects, embodiments and features disclosed herein may be combined with one another.

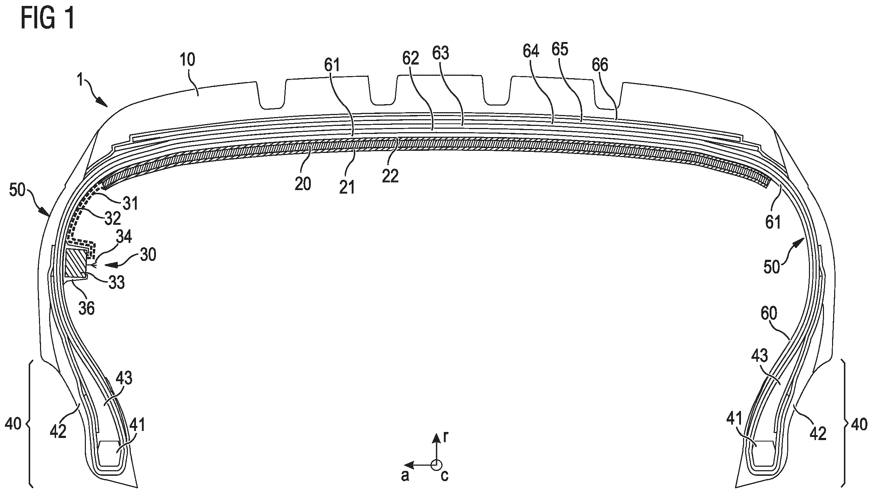

Figure 1 shows a cross-section of a tire 1 in accordance with a preferred embodiment of the present invention. The tire 1 comprises a tread portion 10, two sidewalls 50, and two bead portions 40 each comprising a bead 41, an apex 43 and a chafer 42. Furthermore, the tire 1 comprises an innerliner 61 forming an inner surface 60 of the tire 1 and partially enclosing a tire cavity. The tire 1 also comprises two carcass plies 62, 63 which are folded around each bead 41, as well as two belt plies 64, 65 and an overlay 66 covering the belt plies 64, 65.

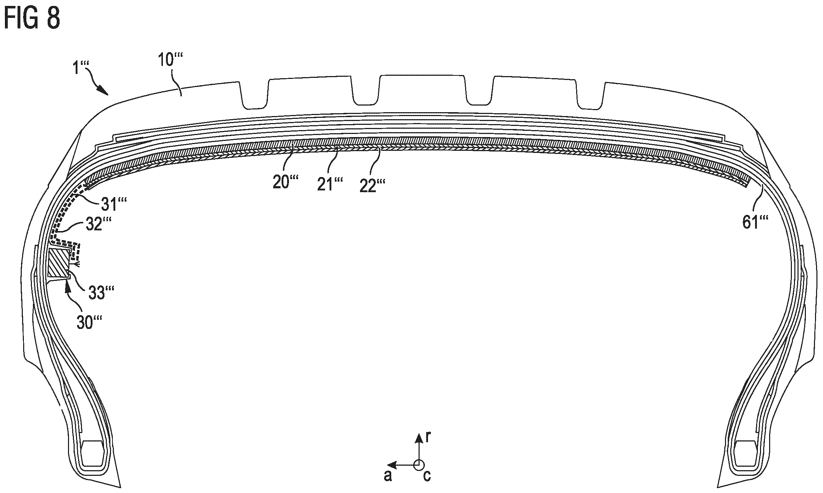

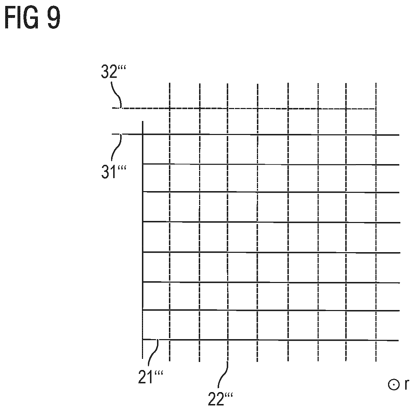

In accordance with the present embodiment, the inner surface 60 of the tire 1, or of the innerliner 61 respectively, carries radially below the tread portion 10 and/or the belt plies 64, 65 a sealant layer 20. In the present case, the sealant layer 20 is attached to the innerliner 61 via a metal foil 22 which is attached to the innerliner 61 via an adhesive, preferably after curing the tire 1. Thus, preferably the sealant layer 20 is also applied after tire cure, or in other words post cure. Adhesives for bonding the metal foil 22 to the innerliner may, e.g., comprise one or more of cyano acrylate adhesives, epoxy adhesives, silicone adhesives, and other adhesives known in the art to connect rubber to metal. In an alternative embodiment, the layer between sealant and innerliner comprises a metal mesh which may be at least partially adhered to the innerliner via the stickiness of the sealant layer. In yet another embodiment, the layer between the sealant layer and the innerliner may be an electrically conductive rubber layer which is provided on the surface of the innerliner. For instance, such a layer could be cured together with the tire. In yet another embodiment, the electrically conductive layer arranged between the innerliner and the sealant layer could be a fabric coated at least on a radially inner side with metal and co-cured to the innerliner, for instance with a coating such as an resorcinol formaldehyde latex (RFL) to improve the bond of the fabric to the innerliner. In another option, two electrically conductive layers of insulated parallel wires, such as those shown in Figures 8 and 9 radially inward a sealant layer, can be provided between the innerliner and a radially outer side of the sealant layer.

As the sealant layer 20 of the embodiment of Figure 1 comprises typically a sticky elastomer compound, no further adhesive is usually necessary to hold the sealant on the metal foil 22. Still in accordance with the present embodiment, a further metal foil 21 is attached to the sealant layer 20 on a radially inner side of the sealant layer 20. Both foils 21 and 22 are spatially and electrically and/or non-conductively separated from each other. In order to reduce the probability that both foils 21, 22 touch each other directly, it is possible to provide one or both foils 21, 22 with an axial width which is smaller, such as at least 1% smaller, than the axial width of the sealant layer 21 (not shown in the present embodiment). In the present embodiment, the sealant layer 20 is electrically non-conductive.

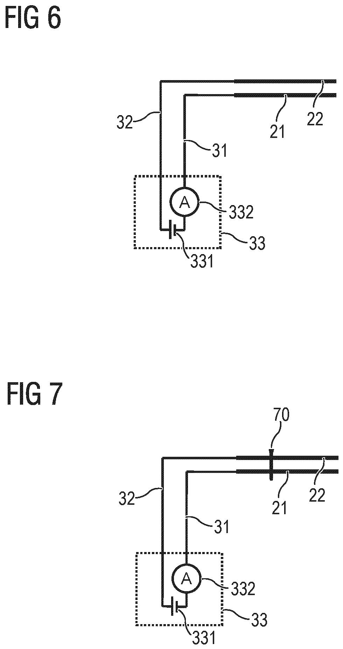

Furthermore, the present non-limiting embodiment has a sensor system 30 comprising a sensor transmitter unit 33 and electrically insulated wires 31, 32 which are separately (electrically and/or conductively) connected to each of the foils 21, 22 and which are parts of a measurement circuit of the sensor system 30 suitable to detect an increase in electrical conductivity between the metal foils 21, 22, such as caused by a metal object puncturing the tire 1, thereby electrically connecting both foils 21, 22. There are various ways known in the art to detect such an increase in conductivity such as detecting an electrical current and/or an increase of electrical current by a current sensor as also schematically shown in the non-limiting electric circuit diagram of Figure 6. A detected increase in conductivity between the metal foils 21, 22 may then be reported via the transmitter 34 of the sensor transmitter unit 33 so as to inform about the detected tire puncture.

As further shown in Figure 6, the first electrically conductive layer, such as the metal foil 21, is in electrical connection with a first pole of a power source 331 of the sensor transmitter unit 33 by the electrical line 31. A second electrically conductive layer, such as the metal foil 22, is in electrical connection with a second pole of the power source 331 of the sensor transmitter unit 33 by the electrical line 32. Furthermore, the exemplary measurement circuit comprises an electrical current sensor 332 of the sensor transmitter unit 33 which is arranged and adapted to measure (or in other words determine) an electrical current in case of an electrical connection between the foils 21 and 22. It is emphasized that the measurement circuit according to the example of Figure 6 constitutes a suitable but nevertheless non-limiting example of such a circuit. The sensor transmitter unit 33 may have additional components as mentioned herein, which are not explicitly depicted in the diagram of Figure 6.

Thus, if a conductive object, such as a metal object, e.g., a nail or screw, punctures the tire 1, the sensor 332 of the measurement circuit detects a short-circuit. Such a detected short-circuit is reported by the sensor system 30 via the transmitter 34 (e.g., comprising an antenna) of the sensor-transmitter unit 33 (not explicitly shown in the circuit of Figure 6). Preferably, the transmitter 34 is integrated in the sensor transmitter unit 33 in a common housing with the sensor 332 and the power source 331. As shown in Figure 1, the sensor transmitter unit 33 may be attached to the inner surface 60 of the tire 1 at a tire sidewall 50. As also indicated, the sensor transmitter unit 33 may be held by a container 36 which is glued and/or cured to the inner surface 60 of the tire 1, particularly to the innerliner 61. Such a container 36 could consist of or comprise a rubber composition, preferably a sulfur cured rubber composition.

Rubber compositions mentioned herein may comprise one or more rubbers chosen from natural rubber, synthetic polyisoprene, polybutadiene rubber, and styrene butadiene rubber. Such rubbers may be functionalized or non-functionalized, such as for the coupling to silica and/or carbon black filler. The rubber compositions may further comprise one or more fillers, such as silica and/or carbon black. They may also comprise one or more of sulfur cure accelerators, processing aids, oils, resins, zinc oxide, filler coupling agents, and sulfur.

The radial direction r, the circumferential direction c and the axial direction a are indicated in Figure 1, and other Figures herein, for the sake of better comprehensibility. The axial direction is in parallel with the axis of rotation of the tire. The circumferential direction c is in parallel to the circumference of the tire and perpendicular to the axial direction a. The radial direction r is also perpendicular to the axial direction and the circumferential direction c. It is emphasized that a reference to one of these directions does not necessarily limit those to a certain orientation, unless otherwise indicated herein.

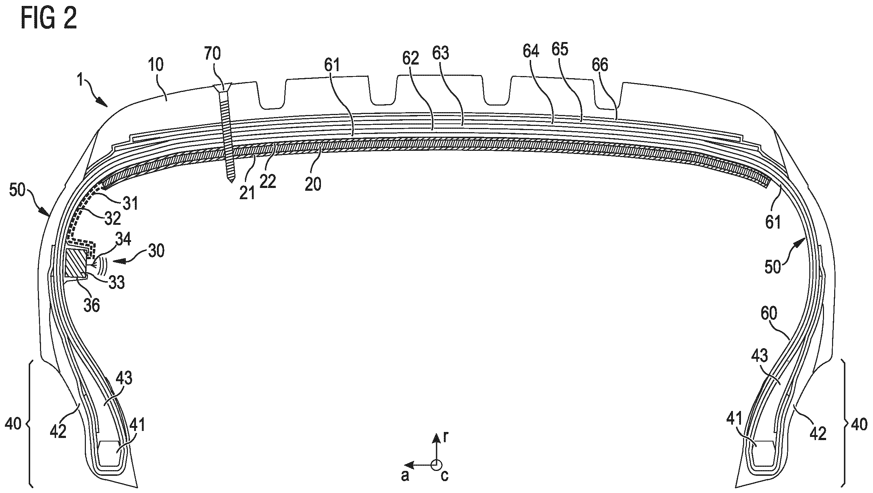

The function of the sensor system 30 is further described with reference to Figures 2 and 7, with reference signs used already in Figures 1 and 6. In particular, Figure 2 shows the tire 1 already shown in Figure 1, which has been punctured by a screw 70. The screw 70 transversely extends through the tread portion 10, the overlay 66, both belt plies 64, 65, the carcass plies 62, 63, the innerliner 61, and through the metal foils 21, 22, as well as through the sealant layer 20. While the material of the sealant layer 20 seals the puncture against an air pressure loss and typically flows also partially along the elongated screw 70, this puncture is detected by the sensor system 30. In particular, the screw 70, which is in most cases, and also herein, a metal screw 70, electrically and/or conductively connects the metal foil 21 with the metal foil 22. As already indicated above, each of the metal foils 21, 22 is connected at a respective axially outer portion with a wire 31, 32 of the sensor system 30. The sensor transmitter unit 33 detects by its sensor an increased electrical current, in this case a short-circuit, between the foils 21, 22 caused by the metal screw 70. Based on this detected short-circuit, the sensor system 30 alarms the driver and/or the vehicle via a wireless signal sent by the transmitter 34 about the detected short-circuit and thus a probable tire puncture. Alternatively, it is possible that the sensor system comprises a receiver allowing receipt of an external status request, such as a tire puncture status request, which triggers sending a wireless signal by the transmitter 34 indicating the detected short-circuit and/or apparent tire puncture. Such a request could be sent by the vehicle or another external device.

Figure 7 shows the same measurement circuit as Figure 6 but in addition with the schematically indicated metal screw 70 electrically connecting the electrically conductive layers or foils 21 and 22. In other words, in Figure 7, the measurement circuit is electrically closed (whereas it is open in Figure 6) by the metal screw electrically connecting the foil 21 with the foil 22 so that the current sensor 332 detects a current and/or short-circuit between the metal foils 21 and 22. Optionally, one or more resistors may be arranged within the circuit (not shown here) to reduce the electrical current between the poles of the power source 331 upon electrically connecting the layers or foils 21, 22 by the screw 70. For instance, one or more resistors could be arranged in the electrical line between the foil 22 and its respective pole of the power source 331. Other suitable resistor arrangements are possible as well. Nevertheless, such additional resistors are not mandatory.

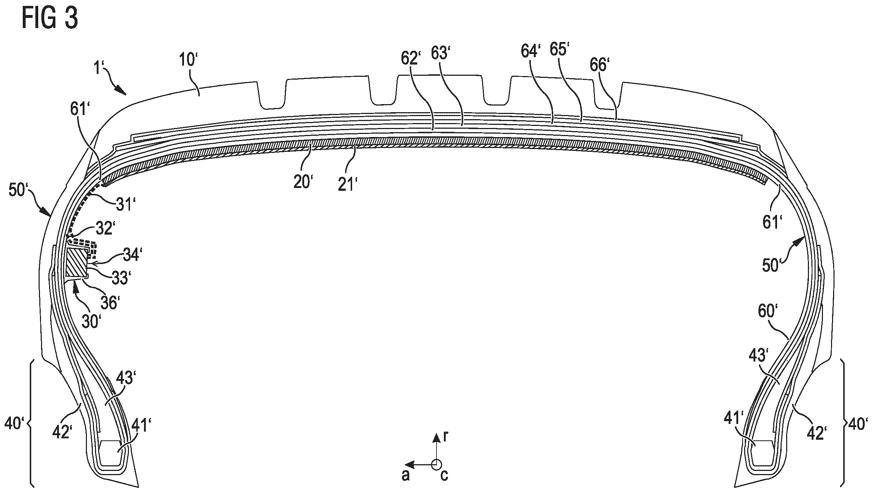

Figure 3 shows another embodiment of the present invention, in which a tire 1' comprises a sensor system 30' which is arranged and/or configured for detecting a tire puncture. The construction of the tire 1' as such is similar to the construction of the tire 1 shown in Figures 1 and 2. Thus, the tire 1' comprises also a tread potion 10', two sidewalls 50', and two bead portions 40' each comprising a bead 41', an apex 43' and a chafer 42'. Furthermore, the tire 1' comprises an innerliner 61' forming an inner surface 60' of the tire 1' and partially enclosing a tire cavity. The tire 1' also comprises two carcass plies 62', 63' which are folded around each bead 41', as well as two belt plies 64', 65', and an overlay 66' covering the belt plies 64', 65'.

The tire 1' further comprises a sealant layer 20' which is attached directly to an inner surface 60' of the innerliner 61' (without requiring an adhesive). Preferably, the sealant layer 20' has been applied after tire cure, in other words, post cure. In this embodiment, the sealant layer 20' is covered by a metal foil 21' which is connected by an electrical line 31' to the sensor transmitter unit 33'. Furthermore, the sensor transmitter unit 33' is connected by a second electrical line 32' with the tire innerliner 61' which is in this case an electrically conductive innerliner 61', or, in other words consists of or comprises an electrically conductive rubber composition. The sensor transmitter unit 33' is attached by a rubber composition-based container 36' to the innerliner 61' and comprises a current sensor and a transmitter 34'.

Preferably, it further comprises one or more of a power source, a memory, and a receiver (not shown herein). The transmitter 34' and the sensor transmitter unit 33' are configured to wirelessly send signals which can, e.g., be received by a respective vehicle, such as a vehicle computer (not shown).

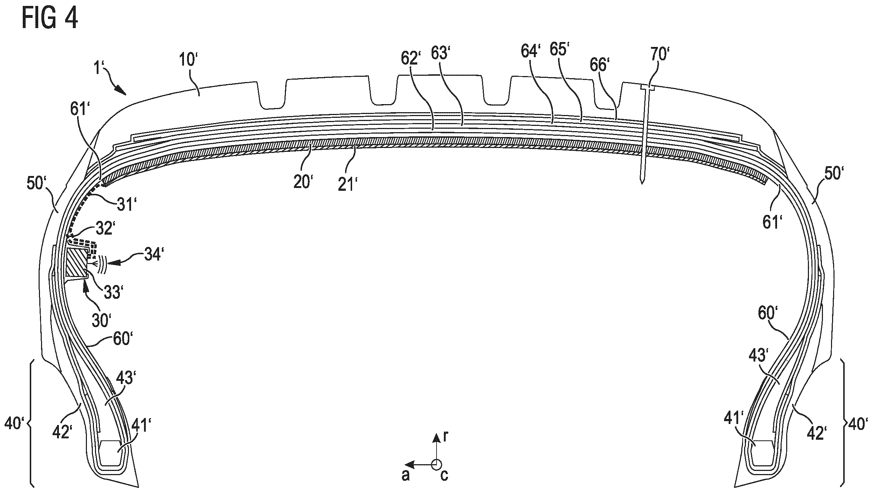

In Figure 4, the tire 1' shown already in Figure 3 is punctured by a nail 70', particularly a metal nail 70'. The nail 70' extends through a radially outer surface of the tread portion 10' beyond a radially inner surface of the metal foil 21'. Thereby, the nail 70' electrically connects the electrically conductive innerliner 61' with the metal foil 21'. Each of the innerliner 61' and the foil 21' are electrically connected with the sensor of the sensor transmitter unit 33' so that the sensor transmitter unit 33' detects an increase in electrical conductivity between the innerliner 61' and the metal foil 21' and generates an alarm signal which is wirelessly transmitted by the transmitter 34'. Thereby, the tire puncture is reported and the tire 1' can be inspected.

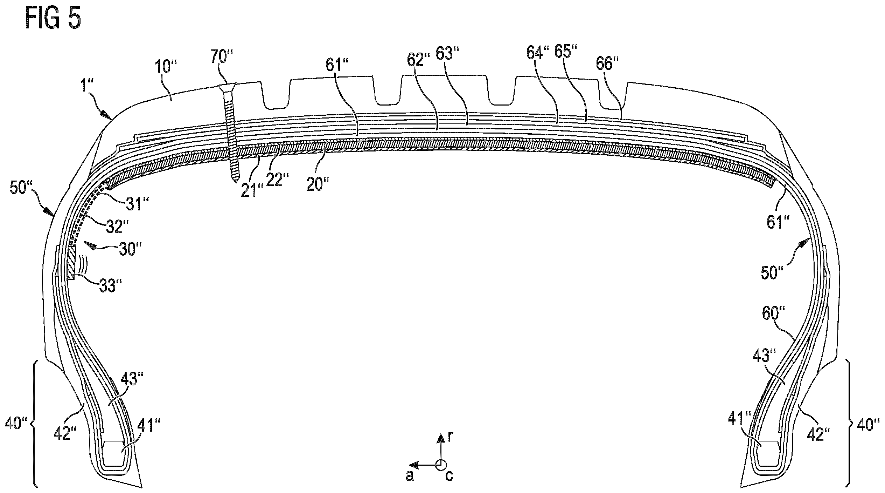

Figure 5 shows another preferred embodiment in accordance with the present invention. Tire 1" of Figure 5 again comprises a tread potion 10", two sidewalls 50", and two bead portions 40" each comprising a bead 41", a bead apex 43" and a chafer 42". Furthermore, the tire 1" comprises an innerliner 61" forming an inner surface 60" of the tire 1" and partially enclosing a tire cavity. The tire 1" also comprises two carcass plies 62", 63' which are folded around each bead 41", as well as two belt plies 64", 65", and an overlay 66" covering the belt plies 64", 65". Moreover, the tire 1" comprises an electrically conductive rubber composition layer 22" and a metal foil 21", which are arranged in parallel to the sealant layer 20". An electrically conductive rubber composition layer can, e.g., be a second sealant layer which is electrically conductive, or a cured rubber composition layer (which has, for example, been cured with the tire). Alternatively, the electrically conductive rubber composition layer 22" could be co-cured to the already cured innerliner. In another option, the metal foil 21" can be replaced by one or more of a metal powder coating, metal plasma coating, a metal mesh, and a plurality of metal wires.

The sensor system 30" of Figure 5 comprises an RFID tag 33", which can also be considered to constitute a sensor transmitter unit. This RFID tag 33" comprises a preferably integrated receiver (such as a radio frequency receiver), a preferably integrated transmitter (such as a radio frequency transmitter), and a preferably integrated sensor (such as a current sensor). The RFID tag 33" is separately electrically connected with the electrically conductive rubber layer 22" and the metal foil 21" via electrical lines 32" and 31", respectively. A respective measurement circuit may correspond to the measurement circuit already shown in Figures 6 and 7. In the situation shown in Figure 5, an electrically conductive metal screw has already pierced the tire 1" and electrically connects the electrically conductive rubber layer 22" with the metal foil 21", wherein the innerliner 61" and the sealant layer 20" are electrically non-conductive in this embodiment. Upon tire puncture, the RFID tag 33" sends via its integrated transmitter a signal indicating the short-circuit between the electrically conductive rubber layer 22" and the metal foil 21". It is possible that the signal is sent to an (external) RFID receiver present in a vehicle to which the tire 1' is mounted (not shown). In another option, the vehicle and/or an (external) RFID receiver is configured to send requests to the RFID tag 33", e.g., requesting whether a short-circuit between the electrically conductive layer 22" and the metal foil 21" has been detected. Upon receipt of such a request from the vehicle and/or the RFID receiver, by the receiver (such as a radio frequency receiver) of the RFID tag 33', the RFID tag 33" replies to the RFID reader via its transmitter.

While sensor transmitter units have been shown herein as being attached to sidewall portions of the tire, those might also be attached to a radially inner side of the sealant layer or an additional layer attached onto a radially inner side of the sealant layer.

As mentioned above, sensor systems and/or sensor transmitter units provided herein may comprise an electrical power source, such as a battery. Alternatively, power may be remotely provided, such as via electromagnetic waves. In this case, the receipt of such electromagnetic waves by a power receiving means, such as an (electric) coil, is also considered as an electrical power source.

Figure 8 shows another embodiment of a tire in accordance with the present invention. In this embodiment, the tire 1‴ comprises a sealant layer 20‴ arranged on an innerliner 61‴, radially opposite to a tread portion 10'". Furthermore, the tire 1‴ comprises two electrically conductive layers 21‴ and 22‴ which are separately connected via electrical lines 31‴ and 32‴ with the sensor transmitter unit 33‴ of a sensor system 30'". The sensor system 30‴ as such may function in the same or similar manner as already disclosed in other embodiments herein. In the present embodiment, both electrically conductive layers 21‴, 22‴ are attached to a radially inner side or surface of the sealant layer 20'". This may particularly be of advantage from an attachment perspective. Optionally, both electrically conductive layers 21'", 22‴ are attached by an adhesive to each other. In the present embodiment, at least one, preferably each electrically conductive layer 21‴, 22‴ further comprises an electrical insulation. In other words, while each of the layers 21‴, 22‴ is electrically conductive it is insulated by an outer electrical insulation towards the other adjacent electrically conductive layer 22''', 21‴. Further details about the layers 21‴, 22‴ are shown in the schematic plan view of Figure 9, viewed in the radial direction r.

As visible in Figure 9, each of the electrically conductive layers 21‴, 22‴ comprises a plurality of parallel electrical wires electrically connected to a respective electrical line 31‴, 32'". In the present example, each wire is electrically conductive (as a metal wire) but comprises an (outer) insulating coating (such as an insulating varnish, or, e.g., an insulating polymer sheath). In the present example, both electrically conductive layers 21'", 22‴ may be held in place via adhesion of the sealant layer 20‴ (not shown in Figure 9).

In an alternative embodiment, it is possible that both electrically conductive layers are still parallel to each other but interwoven, e.g., such that the wires of one electrically conductive layer constitute a warp and the wires of the other electrically conductive layer constitute a weft of a woven net. In another option, it is possible that wires of the first electrically conductive layer and wires of the second electrically conductive layer are alternatingly arranged in parallel to one another. A puncturing object, such as a metal nail or screw, can damage the insulating coating of adjacent wires, resulting in a short-circuit or increased electrical conductivity between both electrically conductive layers.

In still another embodiment, it is possible that both electrically conductive layers are provided on top of each other but are separated by an insulating layer such as an insulating polymer layer or an insulating coating provided on one side of one of the electrically conductive layers facing the other adjacent electrically conductive layer.

In summary, the present invention and embodiments thereof provide an advanced tire with tire puncture sealing properties and which further allows the detection of such punctures, particularly despite the maintenance of tire pressure by a sealant material.

## Claims

1. A tire comprising a circumferential tread portion; an inner surface partially enclosing a tire cavity; a circumferential sealant layer at least partially provided on the inner surface radially below the tread portion, wherein the sealant layer has a radially inner side and a radially outer side; a first electrically conductive layer at least partially covering one side of the sealant layer; a second electrically conductive layer which is arranged essentially in parallel to the first electrically conductive layer, and which is non-conductively separated from the first electrically conductive layer; and a sensor system which is in separate electrical contact with the first electrically conductive layer and the second electrically conductive layer and which is adapted to detect an increase in electrical conductivity between the first electrically conductive layer and the second electrically conductive layer.

2. The tire according to claim 1, wherein the first electrically conductive layer comprises one or more of an electrically conductive coating, an electrically conductive foil, an electrically conductive mesh, an electrically conductive fabric, a plurality of electrically conductive wires, and an electrically conductive elastomer composition.

3. The tire according to claim 1 or 2, wherein at least one of the first electrically conductive layer and the second electrically conductive layer comprises one or more of a metal coating, a metal foil, a metal mesh, a plurality of electrically conductive metal wires, and an electrically conductive rubber composition.

4. The tire according to at least one of the previous claims, wherein the first electrically conductive layer has a thickness within a range of from 0.1 mm to 1 mm and/or wherein the sealant layer has a thickness within a range of from 1 mm to 8 mm.

5. The tire according to at least one of the previous claims, wherein the sealant layer comprises an elastomer composition comprising:
from 80 phr to 100 phr of rubber selected from one or more of butyl rubber, halogenated butyl rubber, ethylene propylene diene monomer rubber, styrene-butadiene rubber, acrylonitrile-butadiene rubber, acrylonitrile-butadiene-styrene rubber, polybutadiene rubber, natural rubber, and synthetic polyisoprene;
from 20 phr to 100 phr of a filler; and
from 150 phr to 600 phr of liquid plasticizer selected from one or more of oil, liquid polymer, and polyisobutene.

6. The tire according to at least one of the previous claims, wherein each electrically conductive layer extends over an area of at least 70% of an adjacent surface of the sealant layer.

7. The tire according to at least one of the previous claims, wherein the tire comprises one or more of:
i) an innerliner forming at least partially the inner surface of the tire and comprising an electrically conductive rubber composition,
ii) a belt ply, arranged radially between the sealant layer and the tread portion, and comprising an electrically conductive rubber composition,
iii) an overlay comprising an electrically conductive rubber composition,
iv) a tread base layer comprising an electrically conductive rubber composition, and
v) the tread portion comprising an electrically conductive rubber composition layer axially extending over at least 90% of an axial footprint width of the tire; and
wherein at least one of said electrically conductive rubber compositions forms the second electrically conductive layer.

8. The tire according to at least one of the previous claims, wherein one or more of the first electrically conductive layer and the second electrically conductive layer is electrically insulated.

9. The tire according to at least one of the previous claims, wherein the first electrically conductive layer is arranged on the radially inner side of the sealant layer and wherein the sealant layer comprises an elastomer composition having an electrical volume resistivity which is at least 100 times higher than the electrical volume resistivity of the first electrically conductive layer; and/or wherein the second electrically conductive layer is arranged on the radially outer side of the sealant layer.

10. The tire according to at least one of the previous claims, wherein the sensor system comprises a measurement circuit adapted to detect a short-circuit between the first electrically conductive layer and the second electrically conductive layer; and, optionally, wherein the sensor system further comprises a transmitter and the sensor system is configured to wirelessly transmit information about a short-circuit detected by the measurement circuit via the transmitter.

11. The tire according to at least one of the previous claims, wherein the measurement circuit comprises a sensor arranged and configured to determine an electrical current between the first electrically conductive layer and the second electrically conductive layer, and, optionally, wherein the measurement circuit comprises a first insulated electrical line and a second insulated electrical line, and wherein the measurement system is in electrical connection with the first electrically conductive layer by the first electrical line and in separate electrical connection with the second electrically conductive layer by the second electrical line.

12. The tire according to at least one of the previous claims, wherein the sensor system comprises a sensor transmitter unit carrying the sensor and the transmitter, and wherein the sensor transmitter unit is attached at one or more of i) the inner surface in a sidewall region of the tire, and ii) a position radially below the sealant layer.

13. The tire according to at least one of the previous claims, wherein the tire further comprises an elastomer composition-based container carrying the sensor transmitter unit, and wherein the container is attached to the inner surface in the sidewall region of the tire.

14. The tire according to at least one of the previous claims, wherein the sensor system comprises an RFID tag comprising the sensor and the transmitter.

15. A tire comprising a circumferential tread portion; an inner surface partially enclosing a tire cavity; a circumferential sealant layer at least partially provided on the inner surface radially below the tread portion; a first electrically conductive layer at least partially covering a radially inner surface of the sealant layer, wherein the sealant layer has an electrical volume resistivity which is at least 100 times higher than an electrical volume resistivity of the first electrically conductive layer; a second electrically conductive layer provided radially above the sealant layer; and a sensor system, which is in separate electrical contact with the first electrically conductive layer and the second electrically conductive layer, and which is adapted to detect a short-circuit between the first electrically conductive layer and the second electrically conductive layer, and which further comprises a transmitter configured to wirelessly transmit a signal informing about a detected short-circuit.
